Europäisches Patentamt

European Patent Office

Office européen des brevets

(19)

(11) Numéro de publication: **0 246 932 B1**

(12) **FASCICULE DE BREVET EUROPEEN**

(45) Date de publication de fascicule du brevet:
07.08.91

(51) Int. Cl.⁵: **A01D 33/10, B65G 69/16**

(21) Numéro de dépôt: **87400493.0**

(22) Date de dépôt: **05.03.87**

(54) Amortisseur de chutes pour produits fragiles.

(30) Priorité: **14.03.86 FR 8603865**

(43) Date de publication de la demande:
**25.11.87 Bulletin 87/48**

(45) Mention de la délivrance du brevet:
**07.08.91 Bulletin 91/32**

(84) Etats contractants désignés:
**BE DE ES GB NL**

(56) Documents cités:
**DE-C- 872 283**
**US-A- 3 698 170**
**US-A- 4 178 123**

(73) Titulaire: **Lemercier, Hubert**
**Heberville**
**F-76749 Fontaine Le Dun(FR)**

(72) Inventeur: **Lemercier, Hubert**
**Heberville**
**F-76749 Fontaine Le Dun(FR)**

(74) Mandataire: **Michelet, Alain**
**BUGNION ASSOCIES 55, rue Boissonade**
**F-75014 Paris(FR)**

EP 0 246 932 B1

## Description

La présente invention est relative à un amortisseur de chute destiné à éviter les lésions subies par des produits fragiles, tels que pommes de terre ou fruits lors de leur chargement dans une benne soulevable placée sur une remorque, l'amortisseur comportant une toile rectangulaire placée à la partie supérieure de la benne, de sorte qu'avant le chargement elle soit sensiblement horizontale et ait ses côtés approximativement parallèles aux côtés de la benne.

Si divers procédés ont été appliqués en différents points de la chaine de conditionnement, le problème du passage des produits fragiles depuis un élévateur jusque dans une benne de transport n'a pas encore été résolu de façon satisfaisante. La hauteur de chute entre la sortie de l'élévateur et la benne peut atteindre deux mètres ou plus. On a essayé divers procédés, comme un réseau de lanières ou un matelas pour freiner la chute ou l'amortir. En particulier, le brevet DE-C- 872 283 décrit un amortisseur de chute selon le préambule de la revendication 1 constitué par une toile dont les quatre côtés sont parallèles aux bords de la benne dans laquelle cette toile est placée à la partie supérieure, cette toile étant suspendue élastiquement le long des bords latéraux de la bonne grâce à deux rouleaux munis de ressorts sur lesquels la toile est enroulée lorsque la benne est vide, la toile se déroulant en fonction de la charge. Ce dispositif a l'inconvénient d'être relativement compliqué et onéreux.

La présente invention a pour objet de créer un système d'amortissement beaucoup plus simple, mais efficace, et dont l'action se limite à la période du début du chargement au cours de laquelle les produits peuvent s'abimer au contact direct du fond de la benne.

A cet effet, selon l'invention, l'amortisseur de chute selon le préambule de la Revendication 1 est caractérisé en ce que la benne est soulevable par l'avant et est munie à l'arrière d'une paroi ouvrable pour le déchargement, et en ce que la toile est munie d'une part, à chacun de ses deux coins susceptible d'être disposés du côté avant de la benne, d'un système non-élastique flexible, de préférence des chaînes, venant maintenir la toile de l'amortisseur sur les parois du côté avant de la benne, et d'autre part, à chacun de ses deux autres coins susceptibles d'être disposés du côté arrière de la benne, d'un système élastique, de préférence des sandows, venant maintenir la toile de l'amortisseur sur les parois du côté arrière de la benne.

En l'absence de charge, le rectangle de toile sera suspendu approximativement horizontalement par les deux chaînes côté avant et par les deux sandows côté arrière de la benne. Pour éviter que les coins de la toile où sont attachées les extrémités des chaines et des sandows ne soient soumis à des efforts exagérés, les quatre bords de la toile seront repliés et cousus de façon à laisser le long des bords des espaces tubulaires où seront logés, d'une part une barre placée côté avant entre les extrémités des deux chaînes et d'autre part trois portions de câble placées entre les extrémités des deux sandows et entre les extrémités des sandows et celles des deux chaînes.

Le fonctionnement est le suivant : Dès que le chargement commence au-dessus du dispositif, les tubercules tombent sur la toile de l'amortisseur et s'y accumulent. La hauteur de chûte est donc limitée à la distance entre extrémité de l'élévateur et toile. De plus le contact du produit avec la toile ne risque pas de détériorer le produit comme le contact de celui-ci avec la fond de la benne. Au fur et à mesure du chargement, le dispositif s'abaisse sous la charge puis commence à s'abaisser vers l'arrière de la benne par suite de l'allongement des sandows, et finit par entrer en contact avec le fond de la benne. A partir de ce moment, un tas est constitué dans la benne, et il suffit de compléter le chargement, le dispositif restant sous ce dernier. La chûte des produits sur le haut du tas ainsi constitué n'est plus dangereuse pour les produits.

Au déchargement, lorsqu'on soulève l'avant de la benne pour que les produits s'écoulent par l'arrière, l'amortisseur de chûte est libéré et reprend sa position initiale lorsque la benne est vide.

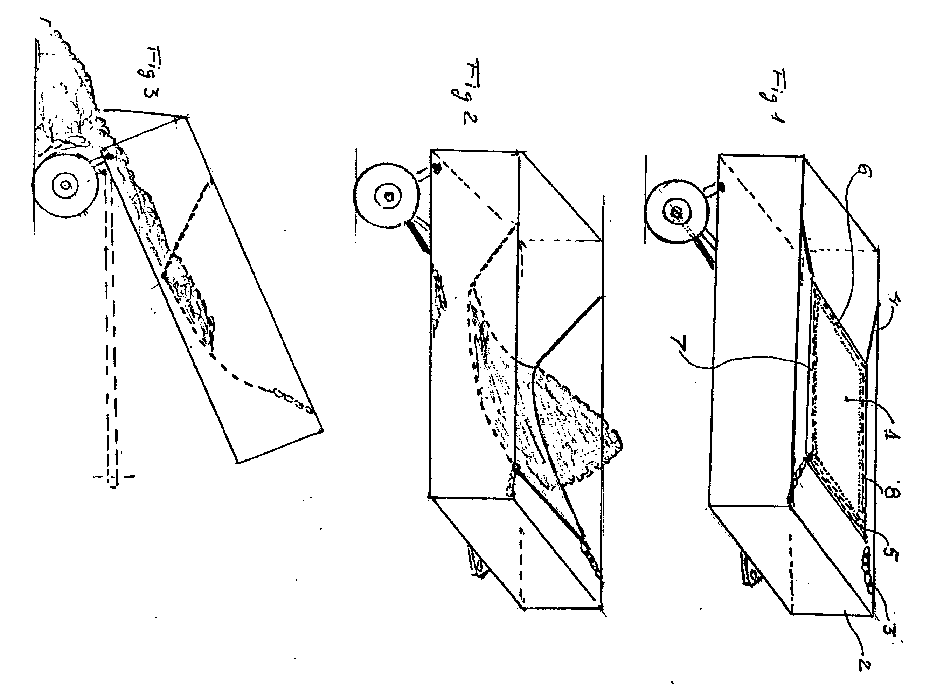

Les Figures 1 à 3 montrent schématiquement l'amortisseur placé dans sa benne: La Figure 1 montre l'amortisseur au repos avant chargement, la Figure 2 montre l'amortisseur tel qu'il se présente au cours du chargement et la Figure 3 la position prise au cours du déchargement.

Sur la figure 1 on a désigné par 1 la toile suspendue dans la benne 2 par des chaînes 3 et des sandows 4. Une barre 5 est placée entre les extrémités des chaînes dans un repli cousu de la toile et des portions de câble 6, 7 et 8 sont aussi glissées dans des replis cousus de la toile 1 entre d'une part les extrémités des sandows 4 et d'autre part entre ces mêmes extrémités et celles des chaînes 3.

Sur les figures, le tas de produit a été figuré par une zône ombrée. On voit sur la Figure 2 que l'amortisseur s'est abaissé et s'est déplacé vers l'avant de la benne, et on voit sur la Figure 3 la position prise lors du déchargement.

On appliquera ce dispositif à la récolte des pommes de terre en particulier et aussi à celle de tout produit fragile dans une benne basculante. La toile forte aura environ 1,8 m de côté et de 1,8 à 2,2 m de long. La barre 5 pourra être constituée par un tube de 50 mm de diamètre, et les câbles pourront avoir un diamètre de 10 mm, les sandows ayant un diamètre de l'ordre de 25mm.

## Revendications

1. Amortisseur de chute destiné à éviter les lésions subies par des produits fragiles, tels que pommes de terre ou fruits, lors de leur chargement dans une benne (2) soulevable placée sur une remorque, l'amortisseur comportant une toile rectangulaire (1) susceptible d'être placée à la partie supérieure de la benne (2) de sorte qu'avant chargement elle soit sensiblement horizontale et ait ses côtés approximativement parallèles aux côtés de la benne (2), **caractérisé** en ce que la benne est soulevable par l'avant et est munie à l'arrière d'une paroi ouvrable pour le déchargement, et en ce que la toile (1) est munie d'une part, à chacun de ses deux coins susceptible d'être disposés du côté avant de la benne (2), d'un système non-élastique flexible, de préférence des chaînes (3), venant maintenir la toile (1) de l'amortisseur sur les parois du côté avant de la benne (2), et d'autre part, à chacun de ses deux autres coins susceptibles d'être disposés du côté arrière de la benne (2), d'un système élastique, de préférence des sandows (4), venant maintenir la toile de l'amortisseur sur les parois du côté arrière de la benne (2).

2. Amortisseur de chute selon la Revendication 1, caractérisé en ce que les quatre côtés de la toile sont repliés et cousus, de façon connue en soi, de façon à réserver des logements tubulaires, le logement situé vers l'avant étant occupé par une barre rigide ( 5 ) dont les extrémités sont reliées aux chaînes ( 3 ) , et les trois autres logements étant occupés par des câbles ( 6, 7, 8 ) dont les extrémités sont reliées aux systèmes de suspension ( 3, 4 ) correspondants à l'extrémité considérée.

## Claims

1. Fall damper destined to avoid the lesions undergone by fragile products, such as potatoes or fruits when they are loaded into a raisable skip (2), said damper comprising a rectangular cloth (1) to be placed on the upper part of the skip (2) in such a way that it is substantially horizontal before loading and its sides are approximately parallel to the sides of the skip (2), characterised in that
the skip is raisable by the front and is provided at the rear with an openable wall for unloading, and in that the cloth (1) is provided on the one hand, at each of its two corners to be placed at the front edge of the skip (2) with a non-elastic, flexible system, preferably chains (3) which keep the cloth (1) of the damper on the front side walls of the skip (2), and on the other hand, at each of its other two corners to be placed at the rear edge of the skip (2), with an elastic system, preferably rubber shock absorbers (4) which keep the cloth of the damper on the rear side walls of the skip (2).

2. Fall damper according to Claim 1, characterised in that the four edges of the cloth are folded and stitched in a manner known in itself, in such a way as to reserve tubular housings, the housing situated towards the front being occupied by a rigid bar (5) the ends of which are connected to chains (3), and the other three housings being occupied by cables (6, 7, 8) the ends of which are connected to suspension systems (3, 4) corresponding to the end in question.

## Patentansprüche

1. Fallbremsvorrichtung zur Verhinderung von Beschädigung von schlagempfindlichen Produkten wie Kartoffeln oder Obst bei deren Einladen in einen auf Anhänger verladenen Kastenauflieger (2), wobei die Fallbremsvorrichtung aus einer rechteckigen Leinwand (1) besteht, die so auf der Oberseite des Kastens (2) angebracht werden kann, daß sie vor jedem Beladen weitgehend waagrecht liegt und ihre Seitenränder annähernd parallel zu den Kastenwänden verlaufen, dadurch gekennzeichnet, daß die Leinwand von vorn her angehoben werden kann und hinten mit einer verschließbaren Öffnung zum Entladen versehen ist sowie dadurch, daß die Leinwand einerseits an ihren beiden vorn am Kasten anzubringenden Ecken mit einer nicht elastischen flexiblen Vorrichtung, vorzugweise Ketten (3) versehen ist, die die Leinwand (1) auf deren Vorderseite an den Seitenwänden des Kastens (2) festhalten und andererseits an ihren beiden hinten am Kasten anzubringenden Ecken mit einer elastischen Vorrichtung, vorzugweise Gummiseilen (4) versehen ist, die die Leinwand (1) auf deren Hinterseite an den Seitenwänden des Kastens (2) festhalten.

2. Fallbremsvorrichtung nach Patentanspruch 1, dadurch gekennzeichnet, daß die vier Seiten der Leinwand umgeschlagen und derart vernäht sind, daß in der dadurch gebildeten Öffnung auf der Leinwandvorderseite eine steife Stange (5) eingeführt werden kann, deren Enden mit den Ketten (3) verbunden sind, während in die drei übrigen Öffnungen Drahtseile (6, 7, 8) eingeführt werden, deren Enden jeweils mit den entsprechenden Spannvorrichtungen (3,4) verbunden sind.

Fig 1

Fig 2

Fig 3